(19)

Europäisches
Patentamt
European
Patent Office
Office européen
des brevets

(11) **EP 4 311 813 A1**

(12) **EUROPEAN PATENT APPLICATION**

(43) Date of publication:
**31.01.2024 Bulletin 2024/05**

(21) Application number: **22306554.1**

(22) Date of filing: **13.10.2022**

(51) International Patent Classification (IPC):
***C04B 11/26*** (2006.01)    ***C04B 18/167*** (2023.01)
***C04B 28/14*** (2006.01)

(52) Cooperative Patent Classification (CPC):
(C-Sets available)
**C04B 28/14; C04B 11/26; C04B 11/262;**
**C04B 18/167**                                   (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.07.2022 EP 22306149**

(71) Applicant: **SAINT-GOBAIN PLACO**
**92400 Courbevoie (FR)**

(72) Inventors:
- **MORLAT, Richard**
**Vaujours 94310 (FR)**
- **BAUD, David**
**Vaujours 94310 (FR)**
- **VOGL, Amelie**
**Vaujours 94310 (FR)**

(74) Representative: **Murgitroyd & Company**
**Murgitroyd House**
**165-169 Scotland Street**
**Glasgow G5 8PL (GB)**

(54) **METHOD AND PLASTERBOARD**

(57)    According to the present invention, there is provided a method of manufacturing a plasterboard, the method comprising combining at least one recycled calcium sulphate material and at least one non-recycled calcium sulphate material to form a mixture of particles, combining at least the mixture of particles and water to form a settable slurry, and drying the settable slurry to form a plasterboard, wherein the ratio of the recycled calcium sulphate material to the non-recycled calcium sulphate material in the mixture of particles is at least 1:1. A plasterboard is also provided.

EP 4 311 813 A1

**(Cont. next page)**

(52) Cooperative Patent Classification (CPC): (Cont.)

C-Sets
**C04B 18/167, C04B 20/026;**
**C04B 28/14, C04B 18/167**

**Description**

**FIELD OF THE INVENTION**

The present invention relates to a method of manufacturing a plasterboard. The present invention also relates to a plasterboard and the use of a plasterboard.

**BACKGROUND TO THE INVENTION**

Gypsum occurs naturally as a raw material in the form of calcium sulphate dihydrate ($CaSO_4$ $2(H_2O)$). Gypsum containing products, such as plasterboard, are prepared by forming a mixture of calcined or dehydrated gypsum, namely calcium sulphate hemihydrate ($CaSO_4$ $0.5(H_2O)$), with water, to form a settable slurry that is then cast into a pre-determined shape. The calcium sulphate hemihydrate reacts with the water and becomes re-hydrated to the dihydrate crystal, which is then cured or dried to the solid state.

Due their versatility, desirable mechanical properties and the possibility of achieving a high level of finish, gypsum products are commonly found throughout buildings. As such, there is a desire to produce gypsum products with a reduced environmental impact.

**SUMMARY OF THE INVENTION**

According to a first aspect of the present invention, there is provided a method of manufacturing a plasterboard, the method comprising: combining at least one recycled calcium sulphate material and at least one non-recycled calcium sulphate material to form a mixture of particles, combining at least the mixture of particles and water to form a settable slurry, and drying the settable slurry to form a plasterboard, wherein the ratio of the recycled calcium sulphate material to the non-recycled calcium sulphate material in said mixture of particles is at least 1:1.

In this way, there is provided a method for manufacturing plasterboard with reduced environmental impact while maintaining favourable manufacture and end-product characteristics.

Here, for the avoidance of doubt, it is understood that the calcium sulphate materials, especially the recycled calcium sulphate material, may be impure. As such, whilst the calcium sulphate material should be understood to comprise, in the majority, calcium sulphate in at least one of its dihydrate, hemihydrate or anhydrite forms, it may also include impurities.

Such impurities may comprise, but are not limited to paper, glass fibres, fluidiser, water resistant agents and other components often introduced into plasterboards in a manufacturing process. As will be understood, where these impurities are present in a plasterboard or similar, they will also be incorporated into the recycled calcium sulphate material. As such, when discussing the ratio of recycled to non-recycled calcium sulphate material, it is correct to compare the relative weights of both materials inclusive of any impurities.

Preferably, the method comprises grinding the mixture of particles before the mixture of particles is combined with water to from a settable slurry. In this way the method may allow the particle size within the mixture of particles to be reduced such that the overall manufacturing process may be improved and/or accelerated.

Preferably, the mean average residence time of particles within the mixture of particles in the grinder is less than 75 seconds. More preferably, the mean average residence time of particles within the mixture of particles in the grinder is less than 60 seconds. Most preferably, the mean average residence time of particles within the mixture of particles in the grinder is less than 45 seconds.

Preferably, the method further comprises calcining the mixture of particles before the mixture of particles is combined with water to form a settable slurry.

Preferably, the Blaine value for the ground, calcined material is less than 8000 $cm^2/g$. More preferably, the Blaine value for the ground, calcined material is less than 7000 $cm^2/g$. Still more preferably, the Blaine value for the ground, calcined material is less than 6000 $cm^2/g$. In this way, the particles within the calcined mixture may have desirable hydration properties and/or a preferred water demand.

Preferably, post calcination, the mixture of particles comprises less than 20 wt.% calcium sulphate anhydrite. More preferably, post calcination, the mixture of particles comprises less than 16 wt.% calcium sulphate anhydrite. Most preferably post calcination, the mixture of particles comprises less than 10 wt.% calcium sulphate anhydrite. The provision of such a mixture of particles may result in an improved process and/or an improved plasterboard.

Preferably, the at least one non-recycled calcium sulphate material comprises calcium sulphate hemihydrate. In some embodiments, the at least one non-recycled calcium sulphate material consist of calcium sulphate hemihydrate. Preferably, the at least one calcium sulphate material comprises calcium sulphate dihydrate. In some embodiments, the at least one non-recycled calcium sulphate material consists of calcium sulphate dihydrate.

Preferably, the at least one recycled calcium sulphate material comprises calcium sulphate hemihydrate. In some embodiments, the at least one recycled calcium sulphate material consists of calcium sulphate hemihydrate. Preferably, the at least one recycled calcium sulphate material consists of calcium sulphate dihydrate. In some embodiments, the at least one recycled calcium sulphate material comprises calcium sulphate dihydrate.

In some embodiments, the non-recycled calcium sulphate material and/or the recycled calcium sulphate material comprises both calcium sulphate hemihydrate and calcium sulphate dihydrate.

Preferably, the recycled calcium sulphate material comprises paper. More preferably, the recycled calcium sulphate material comprises 2.2 wt.% or less paper, or 2 wt.% or less paper. Still more preferably, the recycled calcium sulphate material comprises 1.7 wt.% or less paper, or 1.6 wt.% or less paper, or 1.5 wt.% or less paper. Yet more preferably, the recycled calcium sulphate material comprises 1.2 wt.% or less paper, or 1.0 wt.% or less paper. Even more preferably, the recycled calcium sulphate material comprises 0.84 wt.% or less paper, or 0.7 wt.% or less paper, or 0.5 wt.% or less paper. Most preferably, the recycled calcium sulphate material comprises 0.4 wt.% or less paper, or 0.2 wt.% or less paper. Where the paper content of recycled calcium sulphate material is as described, the recycled calcium sulphate material may have desirable hydration and/or water demand characteristics.

Preferably, the mixture of particles comprises 2.2 wt.% or less paper. More preferably, the mixture of particles comprises 2 wt.% or less paper, or 1.7 wt.% or less paper, or 1.6 wt.% or less paper, or 1.5 wt.% or less paper. Still more preferably, the mixture of particles comprises 1.2 wt.% or less paper. Yet more preferably, the mixture of particles comprises 1 wt.% or less paper, or 0.84 wt.% or less paper. Even more preferably, the mixture of particles comprises 0.7 wt.% or less paper. Still further preferably, the mixture of particles comprises 0.5 wt.% or less paper, or 0.4 wt.% or less paper. Most preferably, the mixture of particles comprises 0.2 wt.% or less paper. Where the paper content of the mixture of particles is as described, the mixture of particles may have desirable hydration and/or water demand characteristics.

Preferably, the method produces equivalent plasterboard at a rate more than 80% of the rate for an equivalent process where the mixture excludes recycled calcium sulphate material. More preferably, the method produces equivalent plasterboard at a rate more than 90% of the rate for an equivalent process where the mixture excludes recycled calcium sulphate material. In this way, desirable properties of the equivalent process are maintained and the calcium sulphate products, such as plasterboard, have substantially the same characteristics as the equivalent products produced by the equivalent process.

Preferably, the calciner throughput rate of the method is more than 80% of the rate for an equivalent process where the mixture excludes recycled calcium sulphate material, and the plasterboard produced by the method is equivalent to that produced by the equivalent process. More preferably, the calciner throughput rate of the method is more than 90% of the rate for an equivalent process where the mixture excludes recycled calcium sulphate material, and the plasterboard produced by the method is equivalent to that produced by the equivalent process. In this way, desirable properties of the equivalent process are maintained.

Preferably, the method comprises adding a fluidiser to the settable slurry. Preferably, fluidiser is added in an amount less than or equal to 1 wt.% of the dry weight of the calcium sulphate materials. Preferably, fluidiser is added in an amount greater than or equal to 0.1 wt.% of the dry weight of the calcium sulphate materials.

Preferably, the manufactured plasterboard has a density of 960 kg/m$^3$ or less. More preferably, the manufactured plasterboard has a density of 760 kg/m$^3$ or less. Preferably, the plasterboard has a density of 520 kg/m$^3$ or more. More preferably, the plasterboard has a density of 680 kg/m$^3$ or more. Preferably, the manufactured plasterboard has a thickness of 12.5 mm or less.

According to a second aspect of the invention there is provided a plasterboard comprising recycled calcium sulphate material and non-recycled calcium sulphate material wherein the ratio of the recycled calcium sulphate material to the non-recycled calcium sulphate material is at least 1:1.

Preferably, the plasterboard has a density of 960 kg/m$^3$ or less. More preferably, the plasterboard has a density of 760 kg/m$^3$ or less. Preferably, the plasterboard has a density of 520 kg/m$^3$ or more. More preferably, the plasterboard has a density of 680 kg/m$^3$ or less. Preferably, the plasterboard has a thickness of 12.5 mm or less.

Preferably, the plasterboard comprises a core, the core comprising paper in an amount of 2.2 wt.% or less. More preferably, the plasterboard comprises a core, the core comprising paper in an amount of 2 wt.% or less. Still more preferably, the plasterboard comprises a core, the core comprising paper in an amount of 1.7 wt.% or less, or in an amount of 1.6 wt.% or less, or in an amount of 1.5 wt.% or less. Yet more preferably, the plasterboard comprises a core comprising paper in an amount of 1.2 wt.% or less. Still further preferably, the plasterboard comprises a core comprising paper in an amount of 1 wt.% or less, or in an amount of 0.84 wt.% or less. Even more preferably, the plasterboard comprises a core comprising paper in an amount of 0.7 wt.% or less, or in an amount of 0.5 wt.% or less, or in an amount of 0.4 wt.% or less. Most preferably, the plasterboard comprises a core comprising paper in an amount of 0.2 wt.% or less.

Preferably, the plasterboard comprises fluidiser in an amount of less than 1 wt.% of the dry weight of calcium sulphate materials. Preferably, the plasterboard comprises fluidiser in an amount greater than 0.1 wt.% of the dry weight of calcium sulphate materials.

According to a third aspect of the invention, there is provided the use of a plasterboard as described herein and/or manufactured in a method as described herein.

## DETAILED DESCRIPTION

Embodiments of the present invention will now be described by way of example only.

It is known that varying the particle size of calcium sulphate materials used in the manufacture of plasterboards can influence the manufacturing process. To study the impact of incorporating recycled calcium sulphate material on particle size, experiments were undertaken.

Here, as a first stage, a mixture of non-recycled and recycled calcium sulphate material was ground and calcined. The particle size produced by the process was controlled by varying the selector position on the grinding apparatus. The selector position controls the egress of the mixture from the grinder, and a higher sector position corresponds to a longer residence time and a smaller particle size. The Blaine value of the ground, calcined material produced in each trial was measured and is detailed below in Table 1.

**Table 1**

|  | Ratio of recycled Calcium Sulphate Material to Non-Recycled Calcium Sulphate Material | Selector Position | Blaine Value for the Ground Calcined Material ($cm^2/g$) |
|---|---|---|---|
| Calcium Sulphate Material 1 | 1:1 | 6.0 | 11496 |
| Calcium Sulphate Material 2 | 1:1 | 4.5 | 9147 |
| Calcium Sulphate Material 3 | 1:1 | 3.5 | 8593 |
| Calcium Sulphate Material 4 | 1:1 | 3.5 | 7664 |
| Calcium Sulphate Material 4b | 1:1 | 3 | 6907 |
| Calcium Sulphate Material 5 | 1:4 | 6 | 6000 |
| Calcium Sulphate Material 6 | Pure Non-Recycled Material | 6 | 5000 |

Whilst the preferred Blaine value for a ground, calcined mixture depends on the overall plasterboard production process, in the present case a value below 8000 $cm^2/g$ is preferred. This preferred Blaine value can be for both pure non-recycled gypsum (Calcium Sulphate Material 6) and for a mixture containing a conventional level of recycled material (Calcium Sulphate Material 5). Where the amount of recycled material was increased to a 1:1 ratio with non-recycled material, as in Calcium Sulphate Material 4 and Calcium Sulphate Material 4b, the desired Blaine value could be obtained.

Beyond the Blaine value measured for the Calcium Sulphate Mixtures, the composition of the mixtures themselves can also influence their suitability for the manufacture of plasterboards.

To investigate this, samples of Calcium Sulphate Material 3, Calcium Sulphate Material 4 and Calcium Sulphate Material 4b were used in further experiments. Here, the line speed attainable during manufacture and the weight percentage of calcium sulphate anhydrite post calcination were measured and compared to exiting methods. Here, the percentage of calcium sulphate anhydrite is measured as a weight percentage of the calcined material.

The results of these experiments are detailed in Table 2.

Table 2

| | Recycled Gypsum Material | Ratio of recycled Calcium Sulphate Material to non-recycled Calcium Sulphate Material | Attained Line Speed (m/min) | % Line Speed of Comparative Example 1 | wt.% Calcium Sulphate Anhydrite in Mixture Post-Calcination |
|---|---|---|---|---|---|
| Comparative Example 1 | N/A | 0:1 | 90 | N/A | 7.0 |
| Comparative Example 2 | Calcium Sulphate Material 3 | 0.22:1 | 90 | 100% | 7.6 |
| Comparative Example 3 | Calcium Sulphate Material 3 | 0.52:1 | 86 | 96% | 8.3 |
| Example 1 | Calcium Sulphate Material 3 | 1:1 | 76 | 84% | 15.3 |
| Example 2 | Calcium Sulphate Material 4 | 1:1 | 82 | 91% | 14.5 |
| Example 3 | Calcium Sulphate Material 4b | 1:1 | 82 | 91% | 9.96 |

From Table 2, it can be seen that increasing the amount of recycled calcium sulphate material does impact the overall manufacturing process and the composition of the calcined material. Firstly, it is notable that as the amount of recycled material increases, the amount of calcium sulphate anhydrite in the post calcination mixture increases. The presence of calcium sulphate anhydrite is typically undesirable due to its high water demand during the manufacturing process. This high water demand is often observed as a reduction in the line speed attainable during the manufacturing process. This effect is also observed in Table 2.

However, it is notable that despite increases in the amount of calcium sulphate anhydrite seen in the mixture, the quantity of calcium sulphate anhydrite present after calcination of the non-recycled calcium sulphate material and recycled calcium sulphate material is below the preferred amount of 20 wt.%, below the more preferred amount of 16 wt.% and below the most preferred amount of 10 wt.%. As such, the line speed of the manufacturing process when a 1:1 ratio of recycled and non-recycled material was used does not decrease below 84% of the rate for the equivalent process wherein the mixture excludes recycled calcium sulphate material.

Beyond the calcium sulphate anhydrite content of the calcined mixture, other components of the mixture introduced by the recycled material can influence the water demand of the mixture during the plasterboard manufacturing process. One of the components that has the most significant effect on water demand is known to be paper. Paper is frequently present in the recycled calcium sulphate material, as paper is often used as a facing layer for plasterboards. As such, it is important to keep the paper content in the mixture of particles at or below 2.2 wt.%.

To illustrate the effect of paper content on the production of plasterboards, experiments were undertaken as outlined below.

Here, 200g samples of calcium sulphate material were prepared, these samples including 50% non-recycled calcium sulphate material in the form of calcium sulphate hemihydrate, and 50% recycled calcium sulphate material. The recycled calcium sulphate material contained 0.4 wt.% paper fibres. As such, the samples included a baseline level of 0.2 wt.% paper fibres. Additional paper fibres were then added to the samples in varying amounts, and water was added to the mixtures to form slurries.

Each slurry sample was then mixed in a blender at a constant speed for 10 seconds to ensure its components were completely mixed. Measurements of slurry viscosity were taken using slump testing, where samples of each slurry were placed into a cylindrical mould of 60 mm diameter and 50 mm height on a glass substrate.

Subsequently, the mould was removed by lifting such that the slurry was unsupported. After the mould was removed, the spread of the slurry across the substrate was measured after a period of 20 seconds. The slurry spread was measured three times at different points across the spread at the end of the period, and the mean average of those measurements recorded.

To measure the impact of paper on the water demand of the mixture of solid materials, the viscosity of a sample containing 0.2 wt.% paper fibres was measured. To characterise any increase in water demand, the amount of water added to the paper fibre containing samples was increased until the same slurry spread was observed. In this way, the increase in water demand could be characterised. The results of these experiments are included in Table 3.

**TABLE 3**

| | Non-Recycled Calcium Sulphate Material (g) | Recycled Calcium Sulphate Material | Paper Fibres (wt.%) | Slurry Water Gauge for Given Viscosity | Increase in Water Gauge vs Example 4 (percentage points) |
|---|---|---|---|---|---|
| Example 4 | 100 | 100g | 0.2 | 75% | - |
| Example 5 | 100 | 100 | 0.7 | 75% | 0 |
| Example 6 | 100 | 100 | 1.2 | 79% | 4 |
| Example 7 | 100 | 100 | 2.2 | 83% | 8 |

Here, the water gauge of the slurry is calculated using the following formula:

$$\left( \frac{Mass\ of\ water}{Mass\ of\ all\ solid\ components} \right) \times 100\% = Water\ Gauge$$

As can be seen in Table 3, increasing the amount of paper fibres in the sample from 0.2 wt.% to 0.7 wt.% had no impact on slurry viscosity.. This is evidenced by the fact that Example 5 demonstrated the same fluidity as Example 4 with no additional water required to obtain the same measured slump.

As the paper content increased, additional water was required to maintain the same slurry viscosity seen in Example 4. In Example 6, containing 1.2 wt.% paper, the water gauge was increased to 79%. In Example 7, containing 2.2 wt.% paper, the water gauge was increased to 83%.

As such, whilst samples with 2.2 wt.% or less paper demonstrated a water demand that is acceptable for the industrial manufacture of plasterboard, a paper content of 0.7 wt.% or below in the solids mixture used to form the slurry resulted in no measureable increase in water demand.

**Claims**

1. A method of manufacturing a plasterboard, said method comprising:

   combining at least one recycled calcium sulphate material and at least one non-recycled calcium sulphate material to form a mixture of particles,
   combining at least said mixture of particles and water to form a settable slurry, and
   drying said settable slurry to form a plasterboard,
   wherein the ratio of said recycled calcium sulphate material to said non-recycled calcium sulphate material in said mixture of particles is at least 1:1.

2. The method of claim 1, wherein said method further comprises grinding said mixture of particles before said mixture of particles is combined with water to form a settable slurry.

3. The method of claim 2, wherein the mean average residence time of particles within said mixture of particles in the grinder is less than 75 seconds.

4. The method of any one preceding claim, wherein said method further comprises calcining said mixture of particles before said mixture of particles is combined with water to form a settable slurry.

5. The method of claim 4, wherein the Blaine value for the ground, calcined material is less than 8000 cm$^2$/g, more preferably less than 7000 cm$^2$/g.

6. The method of claim 4 or claim 5, wherein, post calcination, said mixture of particles comprises less than 20 wt.% calcium sulphate anhydrite, preferably less than 16 wt.% calcium sulphate anhydrite, most preferably less than 10 wt.% calcium sulphate anhydrite.

7. The method of any one preceding claim, wherein said at least one non-recycled calcium sulphate material comprises calcium sulphate hemihydrate and/or calcium sulphate dihydrate.

8. The method of any one preceding claim, wherein said at least one recycled calcium sulphate material comprises calcium sulphate dihydrate.

9. The method of any one preceding claim, wherein said at least one recycled calcium sulphate material comprises calcium sulphate hemihydrate.

10. The method of any one preceding claim, wherein said mixture of particles comprises 2.2 wt.% or less paper, preferably 1.2 wt.% or less paper.

11. The method of any one preceding claim, wherein said method produces equivalent plasterboard at a rate more than 80%, preferably more than 90%, of the rate for an equivalent process where said mixture of particles excludes recycled calcium sulphate material.

12. A plasterboard comprising recycled calcium sulphate material and non-recycled calcium sulphate material wherein the ratio of said recycled calcium sulphate material to said non-recycled calcium sulphate material is at least 1:1.

13. The plasterboard of claim 12, wherein said plasterboard comprises a core comprising paper in an amount of 2.2 wt.% or less, preferably 1.2 wt.% or less.

14. The plasterboard of claim 12 or claim 13, wherein said plasterboard comprises fluidiser in an amount of less than or equal to 1 wt.% of the dry weight of calcium sulphate materials.

15. The plasterboard of any one of claims 12 to 14, wherein said plasterboard has a density of between 680 and 760 kg/m$^3$.

Europäisches
Patentamt

European
Patent Office

Office européen
des brevets

# EUROPEAN SEARCH REPORT

Application Number

EP 22 30 6554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H09 165244 A (CHICHIBU ONODA CEMENT CORP) 24 June 1997 (1997-06-24) * paragraphs [0015], [0016]; claims; examples; table 1 * | 1,8,9,12 | INV. C04B11/26 C04B18/167 C04B28/14 |
| X | US 2021/331978 A1 (SCHERMANN RUDY A [US] ET AL) 28 October 2021 (2021-10-28) * paragraphs [0037], [0044], [0049], [0053]; figure 2; table 2 * | 1,7-10, 12,13,15 | |
| X | US 2009/256291 A1 (TAIRA SHIZUO [JP]) 15 October 2009 (2009-10-15)<br><br>* paragraphs [0007], [0019], [0023] – [0025] * | 1,2,4,7, 8,11,12, 14 | |
| X | RODDEWIG D L: "BETRIEBSERFAHRUNGEN BEIM CALCINIEREN VON NATUR- UND REA-GIPS MIT EINER MAHLBRENNANLAGE", ZKG INTERNATIONAL – ZEMENT – KALK – GIPS INTERNATIONAL, BAUVERLAG BV GMBH, DE, vol. 44, no. 8, 1 August 1991 (1991-08-01) , pages 416-420, XP000248187, ISSN: 0949-0205 * paragraph [0002]; table I * | 1-8,12 | TECHNICAL FIELDS SEARCHED (IPC)<br><br>C04B |

The present search report has been drawn up for all claims

| Place of search | Date of completion of the search | Examiner |
|---|---|---|
| The Hague | 19 June 2023 | Theodoridou, K |

EPO FORM 1503 03.82 (P04C01)

## ANNEX TO THE EUROPEAN SEARCH REPORT
## ON EUROPEAN PATENT APPLICATION NO.

EP 22 30 6554

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2023

| Patent document cited in search report | | Publication date | Patent family member(s) | | Publication date |
|---|---|---|---|---|---|
| JP H09165244 | A | 24-06-1997 | NONE | | |
| US 2021331978 | A1 | 28-10-2021 | CA | 3173686 A1 | 04-11-2021 |
| | | | JP | 2023523891 A | 08-06-2023 |
| | | | US | 2021331978 A1 | 28-10-2021 |
| | | | WO | 2021221866 A2 | 04-11-2021 |
| US 2009256291 | A1 | 15-10-2009 | AU | 2007264632 A1 | 03-01-2008 |
| | | | BR | PI0713113 A2 | 17-04-2012 |
| | | | CA | 2656544 A1 | 03-01-2008 |
| | | | CN | 101479209 A | 08-07-2009 |
| | | | CN | 104692756 A | 10-06-2015 |
| | | | DK | 2036869 T3 | 10-05-2021 |
| | | | EP | 2036869 A1 | 18-03-2009 |
| | | | ES | 2873113 T3 | 03-11-2021 |
| | | | HK | 1205094 A1 | 11-12-2015 |
| | | | JP | 5167126 B2 | 21-03-2013 |
| | | | JP | WO2008001538 A1 | 26-11-2009 |
| | | | KR | 20090026306 A | 12-03-2009 |
| | | | PL | 2036869 T3 | 19-07-2021 |
| | | | RU | 2009102816 A | 10-08-2010 |
| | | | TW | 200804225 A | 16-01-2008 |
| | | | US | 2009256291 A1 | 15-10-2009 |
| | | | WO | 2008001538 A1 | 03-01-2008 |

EPO FORM P0459

For more details about this annex : see Official Journal of the European Patent Office, No. 12/82